# EUROPÄISCHE PATENTSCHRIFT

(11) **EP 2 815 832 B1**
(45) Veröffentlichungstag und Bekanntmachung des Hinweises auf die Patenterteilung: **23.11.2016**
(21) Anmeldenummer: 14001595.9
(22) Anmeldetag: 06.05.2014
(51) Int. Cl.: B23D 31/00

(54) **Bruchtrennvorrichtung**
Break separator
Dispositif de séparation par rupture

(30) Priorität: 16.05.2013 DE 102013008369
(43) Veröffentlichungstag der Anmeldung: 24.12.2014
(73) Patentinhaber: Alfing Kessler Sondermaschinen GmbH, 73433 Aalen (DE)
(72) Erfinder: Schwab, Peter, D-73431 Aalen (DE)
(74) Vertreter: Patentanwälte Bregenzer und Reule Partnerschaftsgesellschaft mbB

(56) Entgegenhaltungen:
- EP-A1- 1 084 784
- EP-A1- 1 577 038
- US-A1- 2010 018 023

## Beschreibung

Die Erfindung betrifft eine Bruchtrennvorrichtung zum Bruchtrennen eines Motorbauteils, insbesondere eines Pleuels, gemäß dem Oberbegriff des Anspruchs 1.

Eine derartige Bruchtrennvorrichtung ist in EP 1 084 784 A1 beschrieben.

Es ist daher die Aufgabe der vorliegenden Erfindung, eine verbesserte Bruchtrennvorrichtung bereitzustellen.

Zur Lösung der Aufgabe ist eine Bruchtrennvorrichtung gemäß des Anspruchs 1 vorgesehen.

Der Abtriebskörper nimmt also vorteilhaft eine Pufferstellung ein, wenn er anhand des Fluids abgestützt ist.

Es ist ein Grundgedanke der vorliegenden Erfindung, dass die Halteeinrichtung zwar eine fluidtechnische Abstützung ermöglich, vorzugsweise mit Druckluft, aber auch mit Hydrauliköl oder einer sonstigen Hydraulikflüssigkeit, das Fluid jedoch nicht unbedingt unter Druck in die Halteeinrichtung eingeführt werden muss. Das in der Widerlager-Teilkammer eingekammerte Fluid, zum Beispiel Luft oder Öl oder dergleichen andere Flüssigkeiten oder Gase, wirkt zweckmäßigerweise im Sinne eines Puffers, stützt also den Abtriebskörper und somit das Stützelement mit einer gewissen Nachgiebigkeit ab, hält aber an sich die jeweilige Stellung. Der Stützantriebsmotor kann dabei inaktiv sein, d.h. er muss beispielsweise nicht dauerhaft bestromt werden (im Falle eines elektrischen Antriebsmotors) oder mit einem ihn antreibenden Fluid beaufschlagt sein, wenn er z.B. ein fluidischer Antrieb ist. Die eigentliche Haltefunktion wird vorteilhaft von der Halteeinrichtung erfüllt. Während des Bruchtrennvorgangs hält die Halteeinrichtung das Motorbauteil in der gewünschten Stellung, während der Stützantriebsmotor dabei inaktiv sein kann - jedoch nicht sein muss.

Der Stützantriebsmotor kann auch zwei oder mehr Komponenten, nämlich einen ersten und einen zweiten Teil-Stützantriebsmotor umfassen. Der eine Stützantriebsmotor treibt dabei den anderen an. Die Stützantriebsmotoren sind sozusagen in Reihe geschaltet. Eine bevorzugte Variante sieht dabei vor, dass zwischen dem sozusagen eigentlichen Stützantriebsmotor und der Halteeinrichtung eine Zusatz-Stelleinrichtung vorgesehen ist, also der erwähnte zweite Teil-Stützantriebsmotor, wobei der Stellweg des sozusagen ersten Stützantriebsmotors, des Haupt-Stützantriebsmotors, zum Verstellen der Halteeinrichtung in die Stützstellung, beispielsweise des Abtriebskörpers der Halteeinrichtung, gegenüber einem Korrektur-Stellweg der Zusatz-Stelleinrichtung vergleichsweise groß ist. Der Korrektur-Stellweg beträgt z.B. nur 0,5% bis 2 %, zweckmäßigerweise etwa 0,8 bis 1,2 %, des Verstellwegs oder Hubs des Haupt-Stützantriebsmotors.

Bei dieser Variante der Erfindung ist es bevorzugt, dass der Stützantriebsmotor und/oder die Zusatz-Stelleinrichtung pneumatische Linearmotoren sind.

Wenn der Abtriebskörper der Halteeinrichtung anhand des Fluids in der Widerlager-Teilkammer abgestützt ist, sozusagen ortsfest ist, verstellt die Zusatz-Stelleinrichtung die Halteeinrichtung vorzugsweise aktiv um den Korrektur-Stellweg von dem abzustützenden Motorbauteil weg oder gibt jedenfalls eine Bewegung des Motorbauteils um den Korrektur-Stellweg frei. Mithin kann also das Motorbauteil um das Maß des Korrektur-Stellweg zu dem jeweiligen Stützelement hin ausweichen, wenn die Bruchtrennung erfolgt. Die Halteeinrichtung bleibt dabei an Ort und Stelle, d.h. die Widerlager-Teilkammer bleibt mit dem Fluid befüllt. Somit kann der Stützantriebsmotor und die Zusatz-Stelleinrichtung während des Bruchtrennvorgangs inaktiv geschaltet sein.

Die Bruchtrennvorrichtung gemäß der Erfindung umfasst zweckmäßigerweise einen Versorgungsspeicher zur Bereitstellung von Fluid, zum Beispiel Öl oder Luft, für die Ventilanordnung zur Befüllung der Widerlager-Teilkammer. Es kann zwar eine Flüidversorgung unter Druck vorgesehen sein, das heißt beispielsweise eine Pumpe zur Erzeugung eines Fluiddrucks für das Fluid, das in die Widerlager-Teilkammer einströmt. Das ist jedoch nicht notwendig. Es kann vorzugsweise sogar ein offener Vorratsbehälter oder offener Speicher, in welchem das Fluid aufgenommen ist, vorgesehen sein.

Es sind selbstverständlich aber auch geschlossene Versorgungsspeicher, von denen das Fluid bereitgestellt wird, möglich. Es ist auch denkbar, dass das Fluid beispielsweise anhand einer Membran in gewissem Maße mit einem Druck belastet ist, damit es leicht und günstig in die Widerlager-Teilkammer ein strömt.

Die Ventilanordnung ist so angesteuert, dass sie die Widerlager-Teilkammer mit dem Fluid befüllt, wenn der Antriebskörper durch den Stützantriebsmotör in die Stützstellung verstellt ist. Es ist beispielsweise möglich, dass der Stützantriebsmotor den Abtriebskörper in der Widerlager-Teilkammer in der geeigneten Position hält, dass das Fluid in die Widerlager-Teilkammer einfließen kann und das Stützelement das Motorbauteil in dieser so eingestellten Stellung hält.

Es ist vorgesehen, dass die Ventilanordnung zum Befüllen der Widerlager-Teilkammer mit dem Fluid mit einem Befüll-Druck ausgestaltet ist, der geringer als ein zum Antreiben des Kolbens des Abtriebskörper in Richtung der Stützstellung notwendiger Antriebsdruck ist. Mithin wird also das Stellelement sozusagen vom Stützantrieb in die Stützstellung verstellt und anschließend von der Halteeinrichtung dort gehalten, wobei keine aktive Druckbeaufschlagung des Kolbens durch das Fluid notwendig ist, d.h. dass das Fluid sozusagen von selbst in die Widerlager-Teilkammer, einströmt, beispielsweise durch Gewichtskraft. Eine aktive Druckbeaufschlagung des Fluids durch beispielsweise einen Druckerzeuger ist nicht notwendig.

Eine Ausführungsform der Erfindung sieht also vor, dass die Bruchtrenneinrichtung keinen Druckerzeuger zur Erzeugung von Antriebsdruck aufweist. Der Stützantrieb hält den Abtriebskörper in der Stützstellung, bis die Widerlager-Teilkammer mit dem Fluid befüllt ist.

Selbstverständlich kann auch vom Stützantriebsmotor noch eine gewisse Kraftbeaufschlagung in der Stützstellung erfolgen, d.h. dass der Stützantriebsmotor im Sinne einer zusätzlichen Stütze für das Motorbauteil wirkt.

Es können unterschiedlichste Stützantriebsmotoren verwendet werden, beispielsweise Linearmotoren elektrischer und/oder fluidtechnischer, insbesondere pneumatischer oder hydraulischer Bauart oder auch Kombinationen davon. Es versteht sich, dass auch elektrische und/oder pneumatische und/oder hydraulische Drehantriebe als Stützantriebsmotoren möglich sind.

Vorzugsweise ist eine Steuerung vorgesehen derart, dass zunächst der Stützantriebsmotor den Abtriebskörper mit bereits in der Widerlager-Teilkammer eingekammertem Fluid in die Stützstellung verfährt und die Ventilanordnung zu einer teilweisen Druckentlastung der Widerlager-Teilkammer ausgestaltet ist, wenn das Stützelement das Motorbauteil bereits abstützt. Mithin wirkt also beispielsweise das Stützelement zunächst mit einer relativ großen Kraft auf das Motorbauteil ein. Dann erfolgt eine gewisse Druckentlastung, das heißt dass das Stützelement nur noch locker oder in einem insbesondere vordefinierten Abstand an dem Motorbauteil anliegt, was den Crackvorgang erleichtert. Dennoch hält die Halteeinrichtung das Stützelement in der jeweiligen Haltestellung.

Eine bevorzugte Ausführungsform sieht vor, dass zwischen dem Stützantriebsmotor und dem Abtriebskörper ein Bewegungsspiel vorhanden ist, wenn der Abtriebskörper und/oder das Stellelement die Stützstellung einnimmt. Eine auch in Kombination dazu ebenfalls mögliche Ausführungsform sieht vorteilhaft vor, dass der Stützantriebsmotor von dem Abtriebskörper weg verstellt ist, wenn der Abtriebskörper oder das Stützelement die Stützstellung. Beispielsweise steuert die bereits erwähnte Steuerung oder eine andere Steuerung den Stützantriebsmotor zunächst in Richtung der Stützstellung an. Anschließend wird die Widerlager-Teilkammer mit dem Fluid befüllt und schließlich der Stützantriebsmotor um eine vorbestimmte Länge von dem Abtriebskörper weg verstellt, so dass er von dem Abtriebskörper freikommt. Eine Rückwirkung durch den Brechvorgang ist dadurch verringert, das heißt das Mötorbauteil wirkt zwar auf die Halteeinrichtung ein, jedoch nicht oder wenig auf den Stützantriebsmotor zurück, der mit Bewegungsspiel und/oder in ausreichender Entfernung von der Halteeinrichtung bzw. deren Abtriebskörper weg verstellt ist.

Der Abtriebskörper kann zweckmäßigerweise durch eine Federanordnung in eine Lösestellung, jedenfalls entgegengesetzt zu der Stützstellung, belastet sein. Die Federanordnung ist beispielsweise ganz oder zumindest teilweise in der Rückstell-Teilkammer angeordnet, könnte aber auch außerhalb des Gehäuses der Halteeinrichtung angeordnet sein.

Die Rückstell-Teilkammer kann offen sein, z.B. wenn zum Verstellen des Abtriebskörpers aus der Stützstellung in die Lösestellung ein Motor vorgesehen ist, z.B. der Stützantriebsmotor, und/oder die obengenannte Federanordnung. Die Rückstell-Teilkammer kann aber auch zur Fluid-Beaufschlagung und Antreiben des Kolbens mit einem Fluid befüllbar sein, z.B. mit Luft oder Öl. Die Halteeinrichtung bildet in diesem Fall sozusagen einen Fluidantrieb.

Es ist also auch möglich, dass der Abtriebskörper aktiv in die Lösestellung verstellt wird, beispielsweise durch einen von dem Stützantriebsmotor separaten Antrieb oder auch von dem Stützantriebsmotor selbst. Bevorzugt ist in diesem Fall zwischen dem Abtriebskörper und dem Stützantriebsmotor eine Kupplung vorhanden, so dass der Stützantriebsmotor mit dem Abtriebskörper kuppelbar ist, beispielsweise zu einem Zurückverstellen des Abtriebskörper aus der Stützstellung in die von dem Motorbauteil entfernte Stellung des Stützelements, der vorgenannten Lösestellung. Die Kupplung kann eine lösbare Kupplung sein, die Ankuppeln und Abkuppeln des Abtriebskörpers von dem Stützantriebsmotor ermöglicht.

Es ist auch möglich, dass z.B. ein Schiebelager und/oder Drehlager mit einem passenden Bewegungsspiel zwischen der Stützstellung und der Lösestellung, z.B. einem Längsspiel, zwischen dem Abtriebskörper und dem Stützantriebsmotor vorgesehen ist.

Der Abtriebskörper, beispielsweise dessen freies Ende oder einen Kopf des Abtriebskörpers, kann das Stützelement integral bilden oder aufweisen. Es ist auch möglich, dass der Abtriebskörper als Träger für das Stützelement dient. Zweckmäßigerweise ist vorgesehen, dass das Stützelement am Abtriebskörper lösbar befestigbar ist, beispielsweise angeschraubt oder dergleichen, so dass es bei Verschleiß ausgetauscht werden kann.

Das Stützelement kann z.B. ein elastisches Pufferelement aufweisen. Vorzugsweise besteht das Stützelement zumindest im wesentlichen aus Metall.

Der Abtriebskörper kann z.B. im Wesentlichen stangenartig sein.

Der Abtriebskörper umfasst zweckmäßigerweise eine Kolbenstange, deren freie Endbereich das Stützelement bildet oder trägt. Die Kolbenstange steht beispielsweise vor ein Gehäuse der Halteeinrichtung vor.

Der Stützantriebsmotor kann dazu vorgesehen sein, ein die Bewegungskammer aufweisendes Gehäuse der Halteeinrichtung anzutreiben. Auf diesem Wege treibt er den in der Halteeinrichtung bzw. deren Gehäuse aufgenommenen Abtriebskörper ebenfalls an. Beispielsweise treibt der Stützantriebsmotor das Gehäuse dann an, wenn in der Widerlager-Teilkammer bereits ein Fluid eingekammert ist. Es ist aber auch möglich, dass der Stützantriebsmotor einen Antriebsvorsprung des Abtriebskörper antreibt, der vor das Gehäuse der Halteeinrichtung zu dem Stützantriebsmotor hin vorsteht. Eine Ausführungsform der Erfindung sieht beispielsweise vor, dass vor den Kolben des Abtriebskörpers einerseits eine Kolbenstange mit dem Stützelement vorsteht, andererseits der Antriebsvorsprung, der ebenfalls stangenartig sein kann.

Der Stützantriebsmotor und die Halteeinrichtung sind zweckmäßigerweise koaxial.

Ein Abtrieb des Stützantriebsmotors und der Abtriebskörper der Halteeinrichtung sind vorteilhaft koaxial.

Der Abtrieb des Stützantriebsmotors und der Abtriebskörper der Halteeinrichtung sind vorteilhaft linear beweglich.

Die Spreizelementanordnung umfasst zweckmäßigerweise mindestens ein erstes Spreizelement und einen Betätigungskörper zum Betätigen des mindestens einen ersten Spreizelements in eine Spreizstellung zum Abtrennen der ersten Komponente des Motorbauteils, insbesondere des Pleueldeckels, von der zweiten Komponente des Motorbauteils, insbesondere dem Pleuelfuß. Zwischen dem Betätigungskörper und dem mindestens einen ersten Spreizelement ist ein Umlenkgetriebe, insbesondere eine Keilflächenanordnung, vorgesehen. Der Betätigungskörper ist durch einen Spreizantrieb antreibbar.

Die Spreizelementanordnung weist also zweckmäßigerweise mindestens ein Spreizelement, zweckmäßigerweise mindestens zwei Spreizelemente auf, nämlich ein erstes und ein zweites Spreizelement, zwischen denen der durch den Spreizantrieb angetriebene Betätigungskörper zumindest während des Bruchtrennens angeordnet ist.

Das Umlenkgetriebe, z.B. die Keilflächen der Keilflächenanordnung, bewirkt eine Bewegungsumlenkung von einer Stellachse des Betätigungselements zu einer Spreizrichtung oder Spreizachse, in welcher die Bruchtrenneinrichtung die erste Komponente des Motorbauteils, zum Beispiel den Pleueldeckel, von der zweiten Komponente des Motorbauteils, zum Beispiel einem Pleuelfuß, abtrennt.

Die Keilflächenanordnung, die zum Beispiel ein Keilgetriebe bildet oder umfasst, ist besonders robust. Eine Keilflächenanordnung ist daher bevorzugt.

Das Umlenkgetriebe umfasst z.B. eine Keilflächenanordnung. Das Umlenkgetriebe kann aber auch ein Kurbelgetriebe, ein Kniehebelgetriebe, ein Exzentergetriebe oder dergleichen aufweisen.

Die Spreizelementanordnung umfasst, wie erwähnt, vorzugsweise mindestens ein zweites Spreizelement, wobei der Betätigungskörper während des Bruchtrennens zwischen dem mindestens einen ersten Spreizelement und dem mindestens einen zweiten Spreizelement oder weiteren Spreizelementen angeordnet ist. Der Vorteil bei mehreren Spreizelementen ist, dass die Spreizelemente in Anlage mit beispielsweise einer Widerlagerfläche außerhalb des zu bearbeitenden Motorbauteils oder auch einer Widerlagerfläche des Motorbauteils gelangen können und sich der Betätigungskörper sozusagen indirekt über die Spreizelemente an der Widerlagerfläche außerhalb des zu bearbeitenden Motorbauteils bzw. der Widerlagerfläche des Motorbauteils abstützen kann. Der Betätigungskörper kann sich aber auch beispielsweise direkt an einer Widerlagerfläche der Bruchtrennvorrichtung oder des Motorbauteils abstützen. In diesem Fall genügt beispielsweise ein einziges Spreizelement.

Die Keilflächen der Keilflächenanordnung bewirken eine Bewegungsumkehr von einer Stellachse des Betätigungselements zu einer Spreizrichtung oder Spreizachse, in welcher die Bruchtrenneinrichtung die erste Komponente des Motorbauteils, zum Beispiel den Pleueldeckel, von der zweiten Komponente des Motorbauteils, zum Beispiel einem Pleuelfuß, abtrennt.

Zu den Keilflächen der Keilflächenanordnung ist festzuhalten, dass es genügt, wenn beispielsweise der Betätigungskörper eine Keilfläche aufweist, während das zugeordnete Spreizelement keine Keilfläche aufweist oder auch umgekehrt, dass das Spreizelement eine Keilfläche hat, während der Betätigungskörper ohne eine Keilfläche an dieser Keilfläche des Spreizelements entlang gleitet. Besonders bevorzugt ist jedoch, wenn Paarungen von Keilflächen vorhanden sind, d.h. dass der Betätigungskörper mit einer Keilfläche an einer Keilfläche des Spreizelements entlang beweglich gelagert ist.

Nachfolgend werden Ausführungsbeispiele der Erfindung anhand der Zeichnung erläutert. Es zeigen:

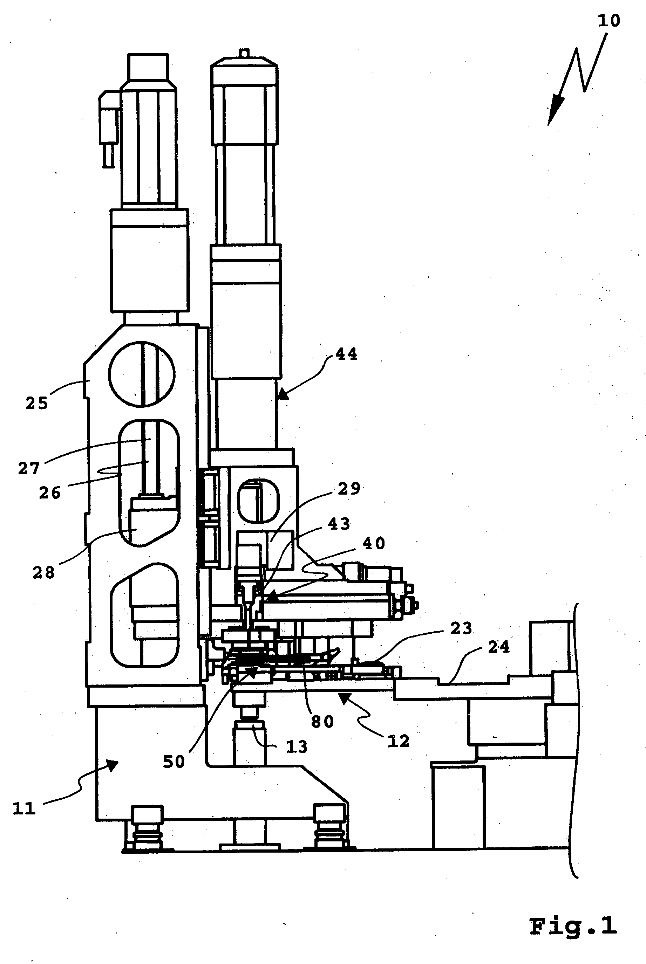

- Figur 1: eine Seitenansicht einer Werkzeugmaschine, die eine Bruchtrennvorrichtung aufweist,

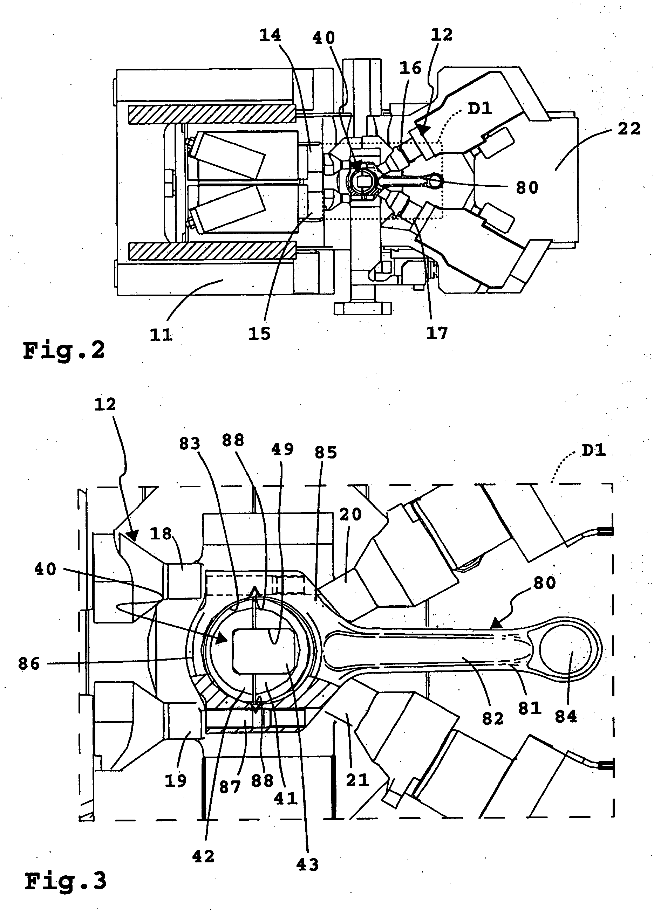

- Figur 2: eine frontale Draufsicht auf ein Unterteil der Werkzeugmaschine gemäß Figur 1 sowie eine Bruchtrennvorrichtung und eine Werkstück-Halteanordnung, von der in
- Figur 3: ein Detail D1 aus Figur 2 dargestellt ist,

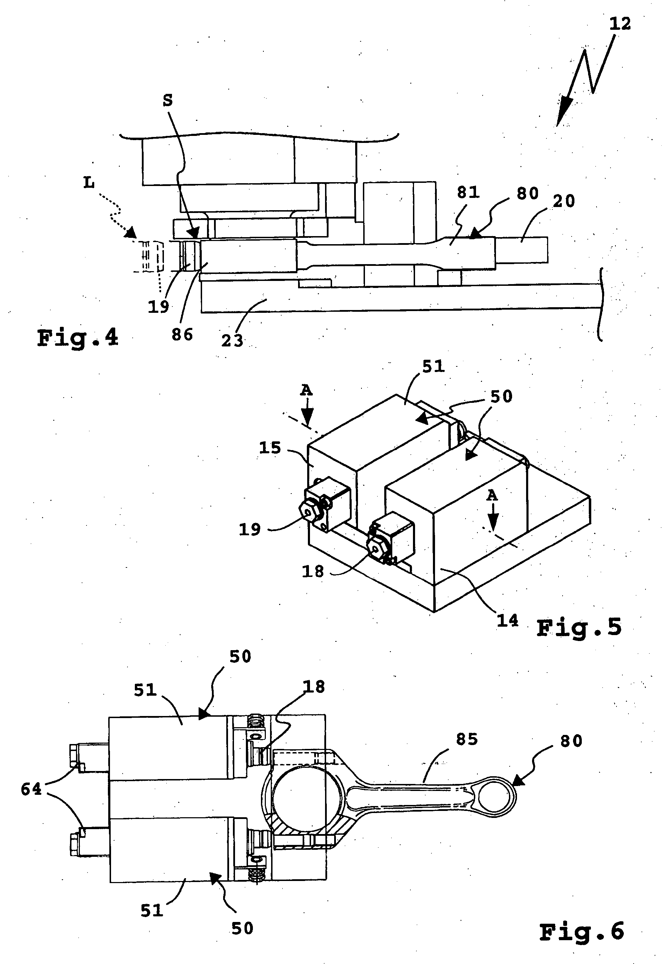

- Figur 4: eine Seitenansicht der Werkstück-Halteanordnung gemäß Figur 2,
- Figur 5: eine perspektivische Schrägansicht auf eine Abstützeinrichtung der Werkstück-Halteanordnung gemäß Figuren 2, 3,
- Figur 6: eine Draufsicht auf die Abstützeinrichtung gemäß Figur 5 in Zusammenhang mit einem Motorbauteil, nämlich einem Pleuel,
- Figur 7: eine teilweise schematische Schnittdarstellung durch die Abstützeinrichtung gemäß Figur 6 entlang einer Schnittlinie A-A in Figur 5, und
- Figur 8: eine schematische Ansicht eines alternativen Stützantriebs für eine Werkstück-Halteanordnung bzw. Bruchtrennvorrichtung gemäß der Erfindung.

Eine in der Zeichnung schematisch dargestellte Werkzeugmaschine 10, die auch ein Bearbeitungszentrum oder Bestandteil eines Bearbeitungszentrums sein kann, weist eine Bruchtrennvorrichtung 40 zum Bruchtrennen von Motorbauteilen 80 auf. Man könnte die Werkzeugmaschine 10 auch als Crack-Maschine bezeichnen.

Die Werkzeugmaschine 10 ist dazu vorgesehen, beispielsweise Pleuel 81 als Motorbauteile 80 zu bearbeiten, wobei ein alternatives Anwendungsfeld der Erfindung auch beispielsweise das Cracken von Zylinderdeckeln von einem Motorblock ist. Auch andere Werkstücke können im Prinzip nach dieser Art bruchgetrennt werden.

Die Pleuel 81 umfassen einen Pleuelschaft 82, der am einen Endbereich ein so genanntes kleines Auge 84, also eine Lagerbohrung oder Lagerausnehmung, sowie ein großes Auge 83 aufweist, ebenfalls eine Lagerbohrung oder Lagerausnehmung. Die beiden Lagerausnehmung oder Augen 83 und 84 sind beispielsweise zur drehbaren Verbindung mit einer Kurbelwelle und einem Kolben vorgesehen (nicht dargestellt).

Im Bereich des großen Auges 83 wird mit der Werkzeugmaschine 10 die nachfolgende Bearbeitung durchgeführt:
Von einem Pleuelfuß 85 wird mittels der Bruchtrennvorrichtung 40 ein Pleueldeckel 86 abgetrennt, so dass sich an den Seitenschenkeln des Pleuelfußes 85 und den Seitenschenkeln des Pleueldeckels 86, die jeweils das große Auge 83 seitlich begrenzen, Bruchtrennflächen ausbilden. Diese Bruchtrennflächen passen formschlüssig zueinander, da die Oberflächentopographie bei beiden Bruchtrennflächen im Idealfall identisch ist.

Die Werkzeugmaschine 10 und/oder das Bearbeitungszentrum können ein Kerbwerkzeug, zum Beispiel zum Laser-Kerben, aufweist, was in der Zeichnung jedoch nicht dargestellt ist. Jedenfalls sind vorteilhaft im Bereich der späteren Bruchtrennflächen oder -linien jeweils eine das Bruchtrennen erleichternde Kerbe 88 vorgesehen. Die Kerben 88 könnten aber auch schon von vorneherein an dem Pleuel 81 vorgesehen sein, beispielsweise wenn dieses als ein Gussteil oder Sinterteil hergestellt ist.

Die Werkzeugmaschine 10 umfasst eine Maschinenbasis 11, zum Beispiel ein Maschinenbett, an der eine Werkstück-Halteanordnung 12 angeordnet ist. Mit der Werkstück-Halteanordnung können Werkstücke, nämlich das Motorbauteil 80 oder das Pleuel 81, gehalten werden, während die weitere Bearbeitung durch die Bruchtrennvorrichtung 40 stattfindet. Die Werkstück-Halteanordnung 12 bildet einen Bestandteil der Bruchtrennvorrichtung 40.

Von unten her wird das Pleuel 81 oder Motorbauteil 80 von einer Werkstück-Stützeinrichtung 13 abgestützt. Die Stützeinrichtung 13 kann direkt an dem Motorbauteil 80 angreifen, dieses also direkt abstützen, oder auch beispielsweise eine Kassette 23, in der das Motorbauteil 80/Pleuel 81 angeordnet ist.

Während der Bearbeitung durch die Bruchtrennvorrichtung 40 ist das Pleuel 81 durch seitlich wirkende Abstützeinrichtungen 14, 15, 16, 17 abgestützt, deren z.B. als Stützköpfe ausgestaltete Stützelemente 18, 19 beispielsweise von der Seite des Pleueldeckels 86 her stützend wirken, während die Stützelemente 20 und 21 der Abstützeinrichtungen 16, 17 von der anderen Seite, nämlich vom Pleuelfuß 85 her abstützen. Somit ist jedenfalls das Pleuel 81 während der Bruchtrenn-Bearbeitung sicher gehalten.

Die Werkzeugmaschine 10 umfasst weiterhin einen Rundtisch 22 oder eine sonstige Werkstück-Fördereinrichtung, mit der Werkstücke, nämlich Motorbauteile 80 oder Pleuel 81 der Bruchtrennvorrichtung 40 zugeführt werden können bzw. auch von der Bruchtrennvorrichtung 40 wieder weg geführt werden können. Auf dem Rundtisch 22 sind beispielsweise Kassetten 23 angeordnet.

Vor die Maschinenbasis 11 steht ein Ständer 25 nach oben vor, der beispielsweise in der Art eines Turms, eines Tragrahmens oder dergleichen ausgestaltet ist. Der Ständer 25 trägt eine Führungsanordnung 26 oder bildet eine solche. Die Führungsanordnung 26 umfasst eine Linearführung 27, an der die Bruchtrennvorrichtung 40 linear geführt ist. Mithilfe eines Positionierantriebs 28, beispielsweise eines elektrischen Antriebs oder pneumatischen Antriebs oder fluidischen Antriebs, kann die Bruchtrennvorrichtung 40 zwischen einer unteren Arbeitsposition, in der sie zur Bearbeitung des Motorbauteils 80 oder Pleuels 81 bereitsteht und einer oberen Stellung, in der die Bruchtrennvorrichtung 40 von dem Motorbauteil 80/Pleuel 81 entfernt ist und ein Werkstückwechsel möglich ist, indem beispielsweise der Rundtisch 22 weiter schaltet und ein unbearbeitetes Werkstück zur weiteren Bearbeitung durch die Bruchtrennvorrichtung 40 zuführt, verstellt werden. Die Bruchtrennvorrichtung 40 ist z.B. an einem an der Linearführungen 27 oder der Führungsanordnung 26 linear geführten Schlitten 29 angeordnet.

Die Bruchtrennvorrichtung 40 umfasst ein erstes Spreizelement 41 und ein zweites Spreizelement 42 einer Spreizelementanordnung 48.

Die Spreizelemente 41, 42 können durch einen Betätigungskörper 43 nach radial außen verdrängt werden, wobei sie den Pleueldeckel 86 vom Pleuelfuß 85 des Pleuels 81 abtrennen. Dann entsteht im Bereich der Kerben 88 eine Bruchtrennfläche, wie oben bereits erläutert.

Die beiden Spreizelemente 41, 42 haben eine Außenumfangskontur, die mit einer Innenumfangskontur der Lageröffnung, des Auges 83, korrespondiert. Mithin können also die Spreizelemente 41, 42 formschlüssig passend am Innenumfang des Auges 83 anliegen. Die Spreizelemente 41, 42 bilden beispielsweise Spreizbacken.

Die Spreizelemente 41, 42 begrenzen eine Führungsaufnahme 49 zur Aufnahme und Führung des Betätigungskörpers 43.

Der Betätigungskörper 43 umfasst beispielsweise einen so genannten Spreizkeil.

An einem freien Endbereich des Betätigungskörpers 43 befindet sich eine Keilfläche, die mit einer Keilfläche am Spreizelement 42 zusammenwirkt und an dieser anliegt. Diese Keilflächen bilden eine Keilflächenanordnung. Der Betätigungskörper 43 wird beispielsweise durch einen Spreizantrieb 44 angetrieben.

Die Abstützeinrichtungen 14, 15 werden nachfolgend näher erläutert, wobei auch die Abstützeinrichtungen 16 und 17 gleichartig aufgebaut sein können. Allerdings kann es sich auch bei mindestens einer der Abstützeinrichtungen 14-17 um eine sozusagen konventionelle Abstützeinrichtung handeln, deren Stützelement beispielsweise direkt von einem hydraulischen Antrieb angetrieben wird, wie z.B. in EP 0 999 911 A1 beschrieben.

Die Abstützeinrichtungen 14, 15 umfassen je eine Halteeinrichtung 50, die einen in einem Gehäuse 51 beweglich aufgenommenen Abtriebskörper 52 aufweisen. Der Abtriebskörper 52 hat einen Kolben 53, der in einer Bewegungskammer 54 des Gehäuses 51 linear hin und her beweglich aufgenommen ist. Der Kolben 53 teilt die Bewegungskammer 54 in eine Widerlager-Teilkammer 55 und eine Rückstell-Teilkammer 56 auf, wobei die Größe der jeweiligen Teilkammer 55, 56 von der jeweiligen Stellung des Kolbens 53 in der Bewegungskammer 54 abhängt. Am Außenumfang des Kolbens 53 können in an sich bekannter Weise Dichtungen 57 vorgesehen sein. Der Abtriebskörper 52 durchdringt mit einer Kolbenstange 58 einen Deckel 59, der die Bewegungskammer 54 an einer Seite verschließt. Der Kolbenstange 58 entgegengesetzt steht ein Antriebsvorsprung 60 vor den Kolben 53 vor, der einen weiteren Deckel 61 durchdringt, der die Bewegungskammer 54 an der dem Deckel 59 entgegengesetzten Seite verschließt.

Das freie Ende 62 der Kolbenstange 58 bildet das Stützelement 18 oder 19.

In der Rückstell-Teilkammer 56 ist eine Feder einer Federanordnung 63 angeordnet, die sich einerseits am Deckel 59, andererseits am Kolben 53 abstützt. Die Federanordnung 63 belastet den Kolben 53 und somit den Abtriebskörper 52 und schließlich auch das Stützelement 18, 19 in eine Lösestellung L, bei der das Stützelement 18, 19 von dem abzustützenden Motorbauteil 80 entfernt ist.

In die entgegengesetzte Richtung, nämlich in eine das Motorbauteil 80 abstützende Stützstellung S, wirkt ein Stützantriebsmotor 64. Der Stützantriebsmotor 64 umfasst beilspielsweise einen elektrischen Linearantrieb 65, dessen Abtrieb 75 auf das freie Ende des Antriebsvorsprungs 60 einwirkt.

Eine Steuerung 66, zum Beispiel eine CNC-Steuerung, eine SPS oder dergleichen steuert den Stützantriebsmotor 64 beispielsweise zunächst so an, dass er das Stützelement 18, 19 in die Stützstellung S verstellt, d.h. dass der Stützantriebsmotor 64 den Antriebsvorsprung 60 und somit den Abtriebskörper 52 in Richtung der Stützstellung S verstellt. Dadurch wird das Volumen der Widerlager-Teilkammer 55 größer. Das Stützelement 18, 19 liegt in der Stützstellung S an dem Motorbauteil 80 stützend an.

Bei dieser Vorschubbewegung oder erst in einem nächsten Schritt steuert die Steuerung 66 eine Ventilanordnung 67 mit einem Ventil 68, z.B. einem 2/2-Wege-Ventil, in Richtung einer Offenstellung an, so dass ein Versorgungskanal 69, der zwischen einem Versorgungsspeicher 70 und einem mit der Widerlager-Teilkammer 55 kommunizierenden Fluidkanal 71 verläuft, geöffnet ist. Dadurch kann in dem Versorgungsspeicher 70 befindliches Fluid F aus dem Versorgungsspeicher 70 in die Widerlager-Teilkammer 55 einströmen. Die Steuerung 66 steuert beispielsweise einen Antrieb 73 des Ventils 68 in Richtung einer Offenstellung des Ventils 68 an. Zweckmäßigerweise ist das Ventil 68 bereits offen, wenn die Vorschubbewegung des Stützantriebsmotors 64 beginnt, so dass kein Unterdruck in der Widerlager-Teilkammer 55 entsteht.

Das Fluid F, beispielsweise Luft oder Hydrauliköl, braucht dabei nicht unter Druck zu stehen. In dem Versorgungsspeicher 70 kann beispielsweise auch eine Rückstellungsmembran 72 vorgesehen sein.

In einem nächsten Schritt schließt die Steuerung 66 das Ventil 68, steuert also den Antrieb 73 entsprechend an. Dadurch ist das in der Widerlager-Teilkammer 55 befindliche Fluid F eingekammert oder abgeschlossen, kann also nicht mehr in Richtung des Versorgungsspeichers 70 zurückfließen.

In einem optionalen weiteren Schritt steuert die Steuerung 66 den Stützantriebsmotor 64 ein Stück weit in Richtung der Lösestellung L an, so dass dieser nicht mehr in Kontakt mit dem Antriebsvorsprung 60 ist.

Selbstverständlich kann auch eine Kupplung 74, zum Beispiel ein Schiebelager oder eine lösbare Kupplung oder dergleichen, zwischen dem Stützantriebsmotor 64 und dem Abtriebskörper 52 vorgesehen sein, so dass der Stützantriebsmotor 64 in Richtung der Lösestellung L von dem Abtriebskörper 52 lösbar und/oder um ein Bewegungsspiel bewegbar ist, während das Stützelement 18, 19 in der Stützstellung S verbleibt, das heißt dass der Abtriebskörper 52 trotz der Verstellung des Stützantriebsmotors 64 in Richtung der Lösestellung L nicht aus der Stützstellung S in Richtung der Lösestellung L verstellt wird.

Jedenfalls wird in der Stützstellung S das Motorbauteil 80 oder das Pleuel 81 von der Abstützeinrichtung 15, 16 abgestützt, so dass die Bruchtrennvorrichtung 40 die Spreizelemehtanordnung 48 einsetzen kann, mithin also Komponenten des Motorbauteils 80 voneinander bruchtrennen kann.

In einem nächsten Schritt öffnet die Steuerung 66 das Ventil 68, so dass das Fluid F aus der Widerlager-Teilkammer 55 zurück in den Versorgungsspeicher 70 strömen kann, also vom Kolben 53 wieder in den Versorgungsspeicher 70 zurück verdrängt werden kann.

Die Federanordnung 63 verstellt den Kolben 53 in Richtung der Lösestellung L.

Es ist auch möglich, dass z.B. Stützantriebsmotor 64 Abtriebskörper 52 aktiv in die Lösestellung L verstellt, z.B. bei der Ankopplung über das Lager oder die Kupplung 74.

In der Lösestellung L ist ein Werkstückwechsel ohne weiteres möglich.

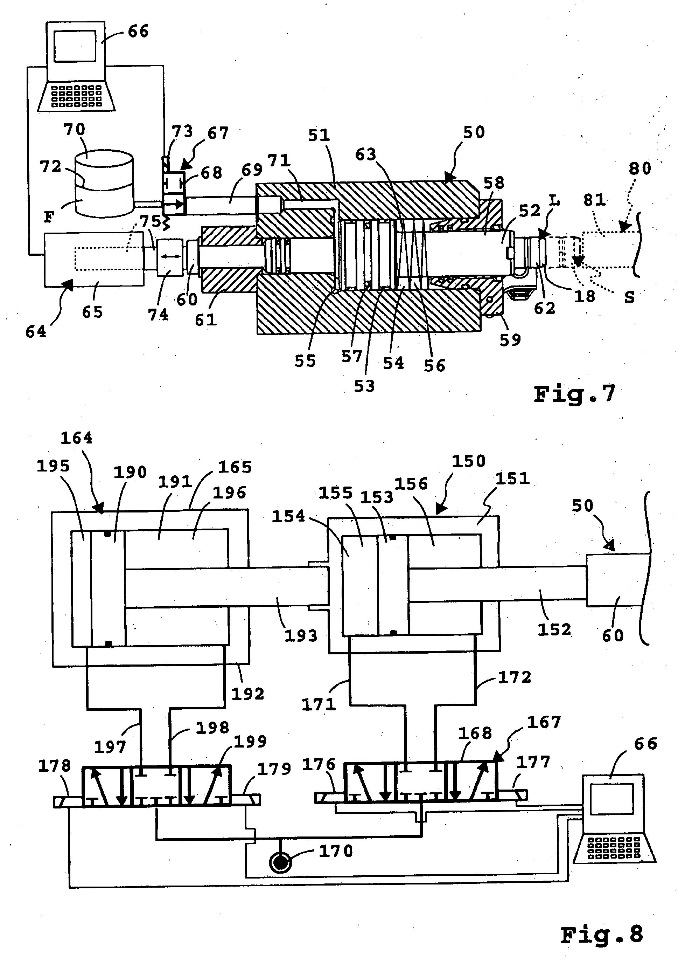

Bei dem in Figur 8 angedeuteten Antriebsprinzip für die Halteeinrichtung 50 ist ein Stützantriebsmotor 164 mit einer zusätzlichen, einen vergleichsweise kurzen Hub oder Stellweg aufweisenden Zusatz-Stelleinrichtung 150 versehen. Die Zusatz-Stelleinrichtung 150 und der Stützantriebsmotor 164 sind in Reihe angeordnet.

Die Zusatz-Stelleinrichtung 150 bildet im Prinzip einen zusätzlichen Stützantriebsmotor, wobei die Äufgabenverteilung zwischen dem Stützantriebsmotor 164 und der Zusatz-Stelleinrichtung 150 vorteilhaft vorsieht, dass der Stützantriebsmotor 174 den wesentlichen Stellweg zwischen der Stützstellung und der Lösestellung der Stützelemente 18-21 bewirkt und die Zusatz-Stelleinrichtung 150 zunächst bei einem Vorschub in Richtung der Stützstellung ebenfalls eine Vorschubbewegung durchläuft, bis die Stützelemente 18-21 in Anlage mit dem Motorbauteil 80 sind und anschließend eine gegensinnige Stellbewegung erfolgt, bei der die Zusatz-Stelleinrichtung 150 einen gewissen Abstand zwischen einerseits dem Stützelement 18-21 und andererseits dem Motorbauteil 80 herstellt, so dass das Motorbauteil 80 für den Bruchtrennvorgang ein gewisses Bewegungsspiel hat, d.h. dass sich die voneinander durch die Bruchtrennung voneinander zu trennenden Komponenten voneinander weg beweglich sind.

Der sozusagen zweistufige Linearantrieb umfassend den Stützantriebsmotor 164 und die Zusatz-Stelleinrichtung 150 ermöglicht also eine exakte, feine Zustellung und anschließend eine definierte Lösebewegung der Stützelemente 18-21 vom Motorbauteil weg. Gegenüber der elektrischen Variante des Stützantriebsmotors 64 gemäß Figur 7 hat der pneumatische Antrieb den Vorteil, dass kein Längenmesssystem oder Hub-Messsystem notwendig ist. Die exakte und feine Einstellung des Abstandes zwischen einerseits den Stützelementen 18-21 und andererseits dem abzustützenden Motorbauteil 80 kann über die mit kleinem Hub, jedoch sehr exakt arbeitende, im Prinzip einen weiteren Linearantrieb darstellende Zusatz-Stützeinrichtung 150 gewährleistet werden.

In einer Bewegungskammer 154 eines Gehäuses 151 an der Zusatz-Stelleinrichtung 150 ist ein Kolben 153 beweglich aufgenommen. Der Kolben 153 unterteilt eine Bewegungskammer 154 in eine Antriebs-Teilkammer 155 und eine Rückstell-Teilkammer 156.

Vor den Kolben 153 steht ein Abtriebskörper 152 vor, dessen freies Ende mit beispielsweise dem Antriebsvorsprung 60 der Halteeinrichtung 50 verbunden ist.

Anhand einer Ventilanordnung 167 , die ein Ventil 168 zur Fluid-Beaufschlagung der Zusatz-Stelleinrichtung 150 umfasst, beispielsweise ein 5/3-Wegeventil, ist die Zusatz-Stelleinrichtung 150 ansteuerbar.

Das Ventil 168 kommuniziert über Leitungen 171, 172 mit der Zusatz-Stelleinrichtung 150. Die Leitungen 171, 172 sind an die Antriebs-Teilkammer 155 und die Rückstell-Teilkammer 156 angeschlossen.

Ein Stützantriebsmotor 164 umfasst einen hydraulischen oder vorzugsweise pneumatischen Linearantrieb 165, wobei selbstverständlich auch ein elektrischer oder pneumatischer Antrieb möglich wäre. Der Stützantriebsmotor 164 umfasst einen Kolben 190, der in einer Bewegungskammer 191 eines Gehäuses 192 des Stützantriebsmotors 164 beweglich aufgenommen ist. Vor den Kolben 190 steht eine Kolbenstange 193 vor, die das Gehäuse 192 durchdringt und das Gehäuse 151 der Zusatz-Stelleinrichtung 150 antreibt.

Der Kolben 190 unterteilt die Bewegungskammer 191 in eine Antriebs-Teilkammer 195 und eine Rückstell-Teilkammer 196. Die Teilkammern 195, 196 kommunizieren über Fluidleitungen 197, 198 mit einem Ventil 199, beispielsweise ein 5/3-Wegeventil.

Die Ventile 199, 168 sind an einen Versorgungsspeicher 170 über einen Versorgungskanal 169 angeschlossen.

Der Stützantriebsmotor 164 hat im Vergleich zu der Zusatz-Stelleinrichtung 150, die sozusagen eine aktive Halteeinrichtung darstellt, einen großen Hub oder Verstellweg. Beispielsweise beträgt der Stellhub des Stützantriebsmotors 164 etwa 30-50 mm, während die Zusatz-Stelleinrichtung 150 nur einen kleinen Hub von beispielsweise 0,5% bis 2 %, zweckmäßigerweise etwa 0,8 bis 1,2 %, des Verstellwegs oder Hubs des Stützantriebsmotors 164 hat.

Das Ventil 168 ist über Ventilantriebe 176, 177 ansteuerbar. Zur Ansteuerung der Ventilantriebe 176, 177 dient beispielsweise eine Steuerung 166. Die Steuerung 166 steuert auch Ventilantriebe 178, 179 des Ventils 199 an.

In einer Grundstellung sind z.B. die Ventilantriebe 177, 179 angesteuert bzw. die Rückstell-Teilkammern 156, 196 mit dem Versorgungsspeicher 170 fluid-verbunden. Dann kann das Motorbauteil 80 z.B. vor der Zusatz-Stelleinrichtung 150 positioniert werden.

Dann wird das Stützelement 18, 19 in Anlage mit dem Motorbauteil 80 gebracht. Die Steuerung 166 steuert dazu die Ventilantriebe 176, 178 an. Zum Anlegen des Stützelements 18, 19 an das Motorbauteil 80 werden die Antriebs-Teilkammer 195 und die Widerlager-Teilkammer mit dem Versorgungsspeicher 170 fluid-verbunden.

Dann kann die Zusatz-Stelleinrichtung 150 und somit das Motorbauteil 80 entlastet werden. Die Steuerung 166 steuert dazu die Ventilantriebe 178, 177 an, so dass der Stützantriebsmotor 164 ortsfest bleibt, weil das diesen ansteuernde Ventil 199 die Antriebs-Teilkammer 195 mit dem Versorgungsspeicher 170 fluid-verbunden hält. Die Zusatz-Stelleinrichtung 150 wird jedoch entlastet, weil die Antriebs-Teilkammer 155 entlüftet und zweckmäßigerweise die Rückstell-Teilkammer 156 mit dem Versorgungsspeicher 170 fluid-verbunden ist. Das Stützelement 18, 19 wird aktiv ein Stück von dem Motorbauteil 80 weg verstellt, so dass es beim Bruchtrennen ein Bewegungsspiel haben kann. Wenn die Rückstell-Teilkammer 156 z.B. nur mit der Atmosphäre und nicht mit dem Versorgungsspeicher 170 verbunden wäre, könnte das Stützelement 18, 19 beim Bruchtrennen zumindest etwas ausweichen oder nachgeben.

## Patentansprüche

1. Bruchtrennvorrichtung (40) zum Bruchtrennen eines Motorbauteils (80), insbesondere eines Pleuels (81), mit einer Spreizelementanordnung (48) zum Abtrennen einer ersten Komponente des Motorbauteils (80), insbesondere eines Pleueldeckels (86), von einer zweiten Komponente des Motorbauteils (80), insbesondere einem Pleuelfuß (85), wobei die Bruchtrennvorrichtung (40) eine Werkstück-Halteanordnung (12) mit mindestens einer Abstützeinrichtung (14-17) zum Abstützen des Motorbauteils (80) aufweist und die Abstützeinrichtung (14-17) einen Stützantrieb zum Verstellen eines Stützelements (18-21) in eine das Motorbauteil (80) abstützende Stützstellung (S) umfasst, wobei zwischen einem Stützantriebsmotor (64; 164) des Stützantriebs und dem Stützelement (18-21) eine Halteeinrichtung (50) angeordnet ist, die einen durch den Stützantriebsmotor (64; 164) zum dem Motorbauteil (80) hin in eine Stützstellung (S) antreibbaren Abtriebskörper (52) aufweist, an welchem das Stützelement (18-21) angeordnet ist, wobei der Abtriebskörper (52) einen in einer Bewegungskammer (54) beweglich aufgenommenen Kolben (53) aufweist, der die Bewegungskammer (54) in eine Widerlager-Teilkammer (55) und eine Rückstell-Teilkammer (56) unterteilt, und wobei sie eine Ventilanordnung (67) zum Befüllen der Widerlager-Teilkammer (55) mit einem Fluid (F), insbesondere Hydrauliköl oder Luft, aufweist, so dass der Abtriebskörper (52) in der Stützstellung (S) anhand des Fluids (F) abgestützt ist, **dadurch gekennzeichnet, dass** die Ventilanordnung (67) zum Befüllen der Widerlager-Teilkammer (55) mit dem Fluid (F) mit einem Befüll-Druck ausgestaltet ist, der geringer als ein zum Antreiben des Kolbens (53) in Richtung der Stützstellung (S) notwendiger Antriebsdruck ist, wobei der Abtriebskörper in der Stützstellung anhand des in der Widerlager-Teilkammer (55) eingekammerten Fluides, welches einen geringeren Druck aufweist als zum Antreiben des Kolbens in Richtung der Stützstellung notwendig ist, abgestützt ist.

2. Bruchtrennvorrichtung nach Anspruch 1, **dadurch gekennzeichnet, dass** die Ventilanordnung (67) zu einem Befüllen der Widerlager-Teilkammer (55) derart ausgestaltet ist, dass sie die Widerlager-Teilkammer (55) mit dem Fluid (F) befüllt, wenn der Abtriebskörper (52) durch den Stützantriebsmotor (64 ; 164) in die Stützstellung (S) verstellt ist.

3. Bruchtrennvorrichtung nach Anspruch 1 oder 2, **dadurch gekennzeichnet, dass** sie einen Versorgungsspeicher zur Bereitstellung von Fluid (F) für die Ventilanordnung (67) zur Befüllung der Widerlager-Teilkammer (55) aufweist.

4. Bruchtrennvorrichtung nach einem der vorhergehenden Ansprüche, **dadurch gekennzeichnet, dass** zwischen dem Stützantriebsmotor (164) und der Halteeinrichtung (50) eine Zusatz-Stelleinrichtung (150) vorgesehen ist, die einen gegenüber einem Stellweg des Stützantriebsmotors (164) zum Verstellen der Halteeinrichtung (50) in die Stützstellung (S) kleineren Korrektur-Stellweg aufweist und, wenn der Abtriebskörper (52) der Halteeinrichtung (50) anhand des Fluids (F) in der Widerlager-Teilkammer (55) abgestützt ist, die Halteeinrichtung (50) um den Korrektur-Stellweg von dem abzustützenden Motorbauteil (80) weg verstellt oder zu einer Bewegung aus der Stützstellung (S) um den Korrektur-Stellweg freigibt.

5. Bruchtrennvorrichtung nach einem der vorhergehenden Ansprüche, **dadurch gekennzeichnet, dass**, wenn der Abtriebskörper (52) die Stützstellung (S) einnimmt, zwischen dem Stützantriebsmotor (64) und dem Abtriebskörper (52) ein Bewegungsspiel vorhanden ist und/oder der Stützantriebsmotor (64) von dem Abtriebskörper (52) weg verstellt ist.

6. Bruchtrennvorrichtung nach einem der vorhergehenden Ansprüche, **dadurch gekennzeichnet, dass** zwischen dem Abtriebskörper (52) und dem Stützantriebsmotor (64) eine Kupplung vorhanden ist, so dass der Stützantriebsmotor (64) mit dem Abtriebskörper (52) lösbar kuppelbar ist, insbesondere zu einem Zurückverstellen des Abtriebskörpers aus der Stützstellung (S) in eine von dem Motorbauteil (80) entfernte Stellung des Stützelements (18-21).

7. Bruchtrennvorrichtung nach einem der vorhergehenden Ansprüche, **dadurch gekennzeichnet, dass** zwischen dem Abtriebskörper (52) und dem Stützantriebsmotor (64) ein Lager vorgesehen ist, das ein Bewegungsspiel zu einem Bewegen des Stützantriebsmotors (64) von dem in der in Stützstellung (S) verbleibenden Abtriebskörper (52) weg aufweist.

8. Bruchtrennvorrichtung nach einem der vorhergehenden Ansprüche, **dadurch gekennzeichnet, dass** der Abtriebskörper (52) durch eine, insbesondere in der Rückstell-Teilkammer angeordnete, Federanordnung (63) entgegengesetzt zu der Stützstellung (S) belastet ist.

9. Bruchtrennvorrichtung nach einem der vorhergehenden Ansprüche, **dadurch gekennzeichnet, dass** der Abtriebskörper (52) eine Kolbenstange (58) umfasst, deren freier Endbereich das Stützelement (18-21) bildet oder trägt.

10. Bruchtrennvorrichtung nach einem der vorhergehenden Ansprüche, **dadurch gekennzeichnet, dass** der Stützantriebsmotor (64) zum Antreiben eines die Bewegungskammer (54) aufweisenden Gehäuses (51) der Halteeinrichtung (50) oder eines Antriebsvorsprungs (60) des Abtriebskörpers (52) vorgesehen ist, der vor das Gehäuse (51) der Halteeinrichtung (50) zu dem Stützantriebsmotor (64) hin vorsteht.

11. Bruchtrennvorrichtung nach einem der vorhergehenden Ansprüche, **dadurch gekennzeichnet, dass** der Stützantriebsmotor (64) einen elektrischen und/oder hydraulischen und/oder pneumatischen Motor, insbesondere einen Linearantrieb, umfasst.

12. Bruchtrennvorrichtung (40) nach einem der vorhergehenden Ansprüche, **dadurch gekennzeichnet, dass** die Spreizelementanordnung (48) ein erstes Spreizelement (41) und zweckmäßigerweise mindestens ein zweites Spreizelement (42) aufweist, und dass die Bruchtrennvorrichtung einen durch einen Spreizantrieb (44) antreibbaren Betätigungskörper (43) zum Betätigen des mindestens einen ersten Spreizelements in eine Spreizstellung umfasst, wobei zwischen dem Betätigungskörper (43) und dem mindestens einen ersten Spreizelement eine Keilflächenanordnung vorgesehen ist.

13. Bruchtrennvorrichtung (40) nach einem der vorhergehenden Ansprüche, **dadurch gekennzeichnet, dass** die Spreizelementanordnung (48) zur Anordnung in einer Lageröffnung des Motorbauteils (80), insbesondere in einem Auge (83) eines Pleuels (81), ausgestaltet ist.

14. Bruchtrennvorrichtung (40) nach einem der vorhergehenden Ansprüche, **dadurch gekennzeichnet, dass** sie einen Bestandteil einer Werkzeugmaschine (10) und/oder eines Bearbeitungszentrums bildet.

## Claims

1. Fracture-splitting apparatus (40) for the fracture-splitting of an engine component (80), in particular a connecting rod (81), with a spreader element assembly (48) for separating a first component of the engine component (80), in particular a connecting rod cover (86), from a second component of the engine component (80), in particular a connecting rod big end (85), wherein the fracture-splitting apparatus (40) has a workpiece holding arrangement (12) with at least one support device (14-17) for supporting the engine component (80), and the support device (14-17) includes a support drive for shifting a support element (18-21) into a support position (S) which supports the engine component (80) wherein, between the support drive motor (64; 164) of the support drive and the support element (18-21) there is provided a holding fixture (50) which has an output body (52), on which the support element (18-21) is mounted, drivable by the support drive motor (64; 164) towards the engine component (80) into a support position (S), wherein the output body (52) has a piston (53), held movably in a movement chamber (54) and dividing the movement chamber (54) into a thrust bearing sub-chamber (55) and a restoring sub-chamber (56), and wherein it has a valve assembly (67) for filling the thrust bearing sub-chamber (55) with a fluid (F), in particular hydraulic oil or air, so that the output body (52) is supported in the support position (S) by the fluid (F), **characterised in that** the valve assembly (67) is designed to fill the thrust bearing sub-chamber (55) with the fluid (F) at a filling pressure which is lower than a drive pressure needed to drive the piston (53) in the direction of the support position (S), wherein the output body in the support position is supported with the aid of the fluid present in the thrust bearing sub-chamber (55), which has a lower pressure than is necessary to drive the piston in the direction of the support position.

2. Fracture-splitting apparatus according to claim 1, **characterised in that** the valve assembly (67) is so designed for filling the thrust bearing sub-chamber (55) that it fills the thrust bearing sub-chamber (55) with the fluid (F) when the output body (52) is shifted by the support drive motor (64; 164) into the support position (S).

3. Fracture-splitting apparatus according to claim 1 or 2, **characterised in that** it has a supply tank for the provision of fluid (F) for the valve assembly (67) for filling the thrust bearing sub-chamber (55).

4. Fracture-splitting apparatus according to any of the preceding claims, **characterised in that** there is provided between the support drive motor (164) and the holding fixture (50) a supplementary adjusting device (150) which has a smaller correcting travel compared to travel of the support drive motor (164) for shifting the holding fixture (50) into the support position (S) and, when the output body (52) of the holding fixture (50) is supported with the aid of the fluid (F) in the thrust bearing sub-chamber (55), shifts the holding fixture (50) by the correcting travel away from the engine component (80) to be supported, or releases it for a movement from the support position (S) by the correcting travel.

5. Fracture-splitting apparatus according to any of the preceding claims, **characterised in that**, when the output body (52) adopts the support position (S), there is freedom of movement between the support drive motor (64) and the output body (52) and/or the support drive motor (64) is shifted away from the output body (52).

6. Fracture-splitting apparatus according to any of the preceding claims, **characterised in that** there is a coupling between the output body (52) and the support drive motor (64) so that the support drive motor (64) may be coupled releasably to the output body (52), in particular for readjustment of the output body from the support position (S) into a position of the support element (18-21) removed from the engine component (80).

7. Fracture-splitting apparatus according to any of the preceding claims **characterised in that** there is provided between the output body (52) and the support drive motor (64) a bearing which has freedom of movement for a movement of the support drive motor (64) away from the output body (52) which remains in the support position (S).

8. Fracture-splitting apparatus according to any of the preceding claims **characterised in that** the output body (52) is biased away from the support position (S) by a spring assembly (63), in particular mounted in the restoring sub-chamber.

9. Fracture-splitting apparatus according to any of the preceding claims **characterised in that** the output body (52) includes a piston rod (58), the free end of which forms or carries the support element (18-21).

10. Fracture-splitting apparatus according to any of the preceding claims **characterised in that** the support drive motor (64) is provided for driving a housing (51) of the holding fixture (50) which has the movement chamber (54) or a driving projection (60) of the output body (52) which extends in front of the housing (51) of the holding fixture (50) to the support drive motor (64).

11. Fracture-splitting apparatus according to any of the preceding claims **characterised in that** the support drive motor (64) comprises an electrical and/or hydraulic and/or pneumatic motor, in particular a linear drive.

12. Fracture-splitting apparatus (40) according to any of the preceding claims, **characterised in that** the spreader element assembly (48) has a first spreader element (41) and expediently at least one second spreader element (42), and that the fracture-splitting apparatus includes an actuating body (43) drivable by a spreader drive (44) for actuating the first spreader element or elements into a spread position, wherein a wedge surface assembly is provided between the actuating body (43) and the first spreader element or elements.

13. Fracture-splitting apparatus (40) according to any of the preceding claims, **characterised in that** the spreader element assembly (48) is designed for mounting in a bearing orifice of the engine component (80), in particular in an eye (83) of a connecting rod (81).

14. Fracture-splitting apparatus (40) according to any of the preceding claims, **characterised in that** it is a constituent part of a machine tool (10) or a machining centre.

## Revendications

1. Dispositif de séparation par rupture (40) pour séparer par rupture un composant de moteur (80), en particulier une bielle (81), comprenant un ensemble d'éléments écarteurs (48) pour retirer une première composante du composant de moteur (80), en particulier un couvercle de bielle (86), d'une deuxième composante du composant de moteur (80), en particulier un pied de bielle (85), dans lequel le dispositif de séparation par rupture (40) présente un ensemble de maintien de pièce (12) pourvu au moins d'un système de soutien (14 - 17) pour soutenir le composant de moteur (80) et le système de soutien (14 - 17) comprend un entraînement de support pour ajuster un élément de support (18 - 21) dans une position de support (S) soutenant le composant de moteur (80), dans lequel est disposé, entre un moteur d'entraînement de support (64 ; 164) de l'entraînement de support et l'élément de support (18 - 21), un système de maintien (50), qui présente un corps de sortie (52) pouvant être entraîné par le moteur d'entraînement de support (64 ; 164), en direction du composant de moteur (80), dans une position de support (S), au niveau duquel l'élément de support (18 - 21) est disposé, dans lequel le corps de sortie (52) présente un piston (53) logé de manière mobile dans un compartiment de déplacement (54), lequel piston divise le compartiment de déplacement (54) en un compartiment partiel de contre-palier (55) et en un compartiment partiel de rappel (56), et dans lequel il présente un ensemble de soupapes (67) pour remplir le compartiment partiel de contre-palier (55) d'un fluide (F), en particulier d'une huile hydraulique ou d'air, de sorte que le corps de sortie (52) est soutenu à l'aide du fluide (F) dans la position de support (S), **caractérisé en ce que** l'ensemble de soupapes (67) est configuré afin de remplir le compartiment partiel de contre-palier (55) du fluide (F) présentant une pression de remplissage, qui est inférieure à une pression d'entraînement requise aux fins de l'entraînement du piston (53) en direction de la position de support (S), dans lequel le corps de sortie est soutenu dans la position de support à l'aide du fluide enfermé dans le compartiment partiel de contre-palier (55), lequel fluide présente une pression inférieure à celle requise aux fins de l'entraînement du piston en direction de la position de soutien.

2. Dispositif de séparation par rupture selon la revendication 1, **caractérisé en ce que** l'ensemble de soupapes (67) est configuré aux fins d'un remplissage du compartiment partiel de contre-palier (55) de telle manière qu'il remplit le compartiment partiel de contre-palier (55) du fluide (F) quand le corps de sortie (52) est ajusté dans la position de support (S) par le moteur d'entraînement de support (64 ; 164).

3. Dispositif de séparation par rupture selon la revendication 1 ou 2, **caractérisé en ce qu'**il présente un réservoir d'alimentation pour fournir du fluide (F) pour l'ensemble de soupapes (67) afin de remplir le compartiment partiel de contre-palier (55).

4. Dispositif de séparation par rupture selon l'une quelconque des revendications précédentes, **caractérisé en ce qu'**un système de réglage additionnel (150) est prévu entre le moteur d'entraînement de support (164) et le système de maintien (50), lequel présente une course de réglage de correction plus petite par rapport à une course de réglage du moteur d'entraînement de support (164) pour ajuster le système de maintien (50) dans la position de support (S) et qui, quand le corps de sortie (52) du système de maintien (50) est soutenu à l'aide du fluide (F) dans le compartiment partiel de contre-palier (55), ajuste le système de maintien (50) en l'éloignant du composant de moteur (80) de soutien sur une distance égale à la course de réglage de correction ou le dégage aux fins d'un déplacement hors de la position de support (S) sur une distance égale à la course de réglage de correction.

5. Dispositif de séparation par rupture selon l'une quelconque des revendications précédentes, **caractérisé en ce que**, quand le corps de sortie (52) adopte la position de support (S), un jeu de déplacement est présent entre le moteur d'entraînement de support (64) et le corps de sortie (52), et/ou le moteur d'entraînement de support (64) est ajusté en étant éloigné du corps de sortie (52).

6. Dispositif de séparation par rupture selon l'une quelconque des revendications précédentes, **caractérisé en ce qu'**un couplage est présent entre le corps de sortie (52) et le moteur d'entraînement de support (64) de sorte que le moteur d'entraînement de support (64) peut être couplé de manière amovible au corps de sortie (52), en particulier afin de ramener par ajustement le corps de sortie hors de la position de support (S) dans une position, éloignée du composant de moteur (80), de l'élément de support (18-21).

7. Dispositif de séparation par rupture selon l'une quelconque des revendications précédentes, **caractérisé en ce qu'**un palier est prévu entre le corps de sortie (52) et le moteur d'entraînement de support (64), lequel présente un jeu de déplacement aux fins d'un déplacement du moteur d'entraînement de support (64) l'éloignant du corps de sortie (52) restant dans la position de support (S).

8. Dispositif de séparation par rupture selon l'une quelconque des revendications précédentes, **caractérisé en ce que** le corps de sortie (52) est contraint par un ensemble de ressorts (63), disposé en particulier dans le compartiment partiel de rappel, à l'opposé de la position de support (S).

9. Dispositif de séparation par rupture selon l'une quelconque des revendications précédentes, **caractérisé en ce que** le corps de sortie (52) comprend une tige de piston (58), dont la zone d'extrémité libre forme ou porte l'élément de support (18 - 21).

10. Dispositif de séparation par rupture selon l'une quelconque des revendications précédentes, **caractérisé en ce que** le moteur d'entraînement de support (64) est prévu afin d'entraîner un boîtier (51) présentant le compartiment de déplacement (54), du système de maintien (50) ou d'une partie faisant saillie d'entraînement (60) du corps de sortie (52), qui fait saillie devant le boîtier (51) du système de maintien (50) en direction du moteur d'entraînement de support (64).

11. Dispositif de séparation par rupture selon l'une quelconque des revendications précédentes, **caractérisé en ce que** le moteur d'entraînement de support (64) comprend un moteur électrique et/ou hydraulique et/ou pneumatique, en particulier un entraînement linéaire.

12. Dispositif de séparation par rupture (40) selon l'une quelconque des revendications précédentes, **caractérisé en ce que** l'ensemble d'éléments écarteurs (48) présente un premier élément écarteur (41) et, de manière appropriée, au moins un deuxième élément écarteur (42), et **en ce que** le dispositif de séparation par rupture comprend un corps d'actionnement (43) pouvant être entraîné par un entraînement d'écartement (44), pour actionner l'au moins un premier élément écarteur dans une position d'écartement, dans lequel un ensemble de surfaces biseautées est prévu entre le corps d'actionnement (43) et l'au moins un premier élément écarteur.

13. Dispositif de séparation par rupture (40) selon l'une quelconque des revendications précédentes, **caractérisé en ce que** l'ensemble d'éléments écarteurs (48) est configuré afin d'être disposé dans une ouverture de montage du composant de moteur (80), en particulier dans un oeillet (83) d'une bielle (81).

14. Dispositif de séparation par rupture (40) selon l'une quelconque des revendications précédentes, **caractérisé en ce qu'**il forme un élément constitutif d'une machine-outil (10) et/ou d'un centre d'usinage.
